# EUROPEAN PATENT SPECIFICATION

(11) **EP 4 370 730 B1**
(45) Date of publication and mention of the grant of the patent: **29.01.2025**
(21) Application number: 22764795.5
(22) Date of filing: 16.08.2022
(51) Int. Cl.: C25B 1/04, C25B 9/05, C25B 9/19, C25B 9/77, C25B 15/02, C25B 15/023, C25B 15/08

(54) **METHOD FOR THE ELECTROLYSIS OF WATER AT VARIABLE CURRENT DENSITIES**
VERFAHREN ZUR ELEKTROLYSE VON WASSER MIT VARIABLEN STROMDICHTEN
PROCÉDÉ D'ÉLECTROLYSE DE L'EAU À DES DENSITÉS DE COURANT VARIABLES

(30) Priority: 17.08.2021 EP 21191769
(43) Date of publication of application: 22.05.2024
(73) Proprietor: Viering, Jentschura & Partner mbB, 81675 Munich (DE)
(72) Inventor: NUZZO, Daniele, 20134 Milan (IT); SPONCHIADO, Michele, 20134 Milan (IT); PEREGO, Michele, 20134 Milan (IT)
(74) Representative: Viering, Jentschura & Partner mbB Patent- und Rechtsanwälte
(86) International application number: PCT/EP2022/072861
(87) International publication number: WO 2023/021034

(56) References cited:
- EP-A1- 3 604 620
- EP-A1- 4 071 275
- WO-A1-2017/100840
- AU-A1- 2019 374 584
- AU-B2- 2013 224 676
- US-A1- 2013 337 368
- TRINKE P ET AL: "Hydrogen Crossover in PEM and Alkaline Water Electrolysis: Mechanisms, Direct Comparison and Mitigation Strategies Hydrogen Crossover in PEM and Alkaline Water Electrolysis: Mechanisms, Direct Comparison and Mitigation Strategies", J. ELECTROCHEM. SOC. F502 F502 JOURNAL OF THE ELECTROCHEMICAL SOCIETY, 1 January 2018 (2018-01-01), pages 502 - 513, XP093000347, Retrieved from the Internet <URL:https://iopscience.iop.org/article/10.1149/2.0541807jes/pdf> [retrieved on 20221121]

## Description

### FIELD OF THE INVENTION

The present invention concerns a method for the electrolysis of water at variable current densities for alkaline water electrolysis.

### BACKGROUND OF THE INVENTION

In order to reduce carbon dioxide emission associated with energy production by burning fossil fuels, worldwide efforts are directed towards replacing fossil fuels by renewable energy sources. Many renewable energy sources such as wind energy and solar energy, are typically intermittent/fluctuating by nature so that there is often an imbalance at any given point in time between available renewable energy and energy required by households and industry. Hydrogen gas is used in a large variety of industrial applications including the production of electrical energy in fuel cells. On an industrial scale, hydrogen is mainly produced from natural gas in processes, for example steam reforming, which hydrogen and carbon dioxide in which are therefore less suited for reducing the "carbon footprint" of energy production. However, as an alternative to natural gas steam reforming, hydrogen can also be produced by water electrolysis which is not associated with carbon emissions when renewable energy sources are used. Therefore, hydrogen gas obtained by water electrolysis from renewable energy is expected to play a major role as a hydrogen source in many industrial processes and as a storage medium for the renewable electrical energy. Alkaline water electrolysis is a particularly promising variant of water electrolysis for producing hydrogen on an industrial scale because it does not require costly noble metal-based catalysts. Alkaline water electrolysis is typically carried out in electrochemical cells out in a temperature range from 40 to 90 °C where an anodic compartment comprising an anode and a cathodic compartment comprising a cathode are divided by a suitable separator such as a diaphragm or a membrane. An aqueous alkaline solution at a pH higher than 7, for instance an aqueous KOH solution, is supplied as an electrolyte to the cell and an electrical current flow is established between electrodes in the cathodic and anodic compartment, respectively, i.e. between cathode and anode, at a potential difference (cell voltage) with a typical range of 1.6 to 2.4 V. Under these conditions, water is split into its constituents so that gaseous hydrogen evolves at the cathode and gaseous oxygen evolves at the anode. In alkaline media, the cathodic hydrogen evolution reaction can be summarized as follows

4H₂O + 4 e- → 4 OH- + 2 H₂ (1).

The hydroxide ions generated in the cathodic compartment migrate through the separator to the anodic compartment where the anodic oxygen evolution reaction can be summarized as

4 OH- → O₂ + 2 H₂O + 4 e- (2).

In an industrial process, a plurality of cells are usually arranged in a serial stack configuration, i.e. a multiplicity of electrolysis cells connected in series. The electrolyte/gas mixtures generated in each compartment are removed from each cell, the gaseous products are separated from the liquid electrolyte and the liquid electrolyte is recycled to the cell compartments of the stack so that the cells/stack can be operated in a continuous fashion. As can be taken from equations (1) and (2) above, twice the molar equivalent of water is produced in the cathodic compartment than in the anodic compartment. Therefore, in order to allow the electrolyte in both compartments to remain balanced, the anolyte (electrolyte in the anodic compartment) and the catholyte (electrolyte in the cathodic compartment) are usually mixed together after gas-liquid separation before being pumped back to the electrolyzer.

An industrial scale stack for alkaline water electrolysis comprising a multiplicity of individual electrochemical/electrolysis cells connected in series is optimized in terms of cell voltage and hydrogen purity for an operation at a nominal load at high current densities. Especially when relying on renewable energy, the availability and/or cost of electrical energy will fluctuate during operation so that it is desired to allow electrolysis to be conducted even at current densities well below the designed nominal load at high current densities.

The separator used in alkaline water electrolysis still has a residual permeability for hydrogen and oxygen gases, respectively so that during operation, a concentration gradient driven diffusion of hydrogen from the cathodic into the anodic compartment and of oxygen from the anodic into the cathodic compartment occurs. To meet current safety requirements, the electrolyzer has to be operated in a manner which avoids oxygen to hydrogen (OTH) concentrations in the cathodic compartment and hydrogen to oxygen (HTO) concentrations in the anodic compartment above 4 vol.% or preferably above 2 vol.% (the lower explosive limit for the mixture in both cases being at around 4 vol.%). During nominal, high current density operation, meeting these safety requirements does generally not constitute a problem because any residual gas from the opposite compartment migrating through the separator is considerably diluted due to the large amount of gas produced at the anode and cathode, respectively. However, at lower current densities with less "desired gas" being produced at the respective electrodes, gas migrating from the opposite compartment may lead to HTO or OTH ratios at or above the above-mentioned safety threshold.

European patent application EP 3604642 A1 and Australian patent application AU 2019374584 A1 (based on international application WO 2020/095664 A1) describe a water electrolysis system and a water electrolysis method for hydrogen production via alkaline water electrolysis having a gas-liquid separation tank which is provided with an inflow port for a gas/electrolyte mixture which is disposed at a higher position than the liquid surface of the electrolyte inside the separation tank. Using distinct separation tanks for oxygen and hydrogen, respectively, and an appropriate liquid level management in the separation tanks allows to improve purity of the generated hydrogen. Moreover, a dedicated purifier can be employed.

US patent application US 2013/337368 A1 describes a separator for a water electrolysis cell which consists of an anodic separator element and a cathodic separator element spaced apart from each other to create an internal bypass channel. By feeding an electrolyte free of dissolved gases into the bypass channel, a back-wash flow into the anodic and cathodic compartments is established, allowing to reduce migration of the respective gaseous species through the separator.

It is therefore an object of the present invention to provide a method for the electrolysis of water using an alkaline electrolyte which optimizes the performance in terms of cell voltage and a gas purity over a wide range of current densities which may vary during operation.

### SUMMARY OF THE INVENTION

Various aspects of the present invention are described in the appended claims.

When a method for the electrolysis of water is carried out at varying current densities, for instance due to using renewable energies as a source of electrical energy, the current density will vary between a minimum operating current density and a maximum operating current density. Accordingly, the present invention defines a threshold current density within the range of operating current densities, i.e. above said minimum operating current density and below said maximum operating current density of the electrolyzer which subdivides the operating current density range into two ranges, namely a low current density range extending from minimum operating current density to threshold current density and a high current density range extending from above threshold current density to maximum current density. The present invention further suggests in accordance with claim 1 that the gas migration through the separator shall be actively influenced, specifically limited, in different manners in the low current density range and the high current density range, respectively. In the low current density range, safety considerations are of particular concern and the invention suggests actively limiting the migration of hydrogen generated in the cathodic compartment through the separator into said anodic compartment as compared to a purely concentration gradient driven migration in order to avoid the HTO ratio in the anodic compartment reaching a critical level. In the high current density range, safety considerations are less concerning and the operation can be optimized in terms of purity of the produced hydrogen. Therefore, the present invention suggests actively limiting the migration of oxygen generated in the anodic compartment through the separator into the cathode he compartment as compared to a purely concentration gradient driven migration as much as possible.

The active limitation of gas migration through the separator during operation can be achieved with various means. For instance, the oxygen and hydrogen permeabilities of the separator are influenced by mechanical and electrochemical properties of the separator. For instance, it is conceivable to alter the pore size distribution of the separator by mechanically acting on the separator. However, such solutions tend to be costly by increasing the complexity of the cell design. Therefore, it is preferred to leave the separator unchanged. Rather, the present inventors have observed that in addition to the migration of gases through the separator driven by a concentration gradient, the gas migration can additionally be actively influenced by increasing the hydraulic pressure of the electrolyte in one compartment over the hydraulic pressure in the other compartment. Thus, according to the method of the present invention, at operating current densities up to said threshold current density, a hydraulic pressure exerted on said separator in said anodic compartment is higher than a hydraulic pressure exerted on said separator in said cathodic compartment, thus leading to a limitation of hydrogen migration from the cathodic compartment into the anodic compartment.

Likewise, at operating current densities above said threshold current density, a hydraulic pressure exerted on said separator in said cathodic compartment is higher than a hydraulic pressure exerted on said separator in said anodic compartment leading to a limitation of oxygen migration from the anodic compartment into the cathodic compartment.

In the context of the present invention, a differential pressure is measured as the hydraulic pressure in the cathodic compartment minus the hydraulic pressure in the anodic compartment. Consequently, a positive differential pressure means that the pressure in the cathodic compartment is higher than in the anodic compartment while a negative differential pressure means that the pressure in the anodic compartment is higher than in the cathodic compartment.

A pressure differential between cathodic and anodic compartment can be generated by various means. For instance, recirculation of the electrolyte is usually accomplished using a catholyte pump and anolyte pump. Adjustable valves at the outlets of the cathodic and anodic compartments which are adjusted according to the current density can be employed in order to achieve the desired hydraulic pressure. As an alternative, the liquid level in the hydrogen and oxygen separation vessels can be adjusted to influence the hydraulic pressure inside the anodic and cathodic compartments via the respective discharge lines.

In one embodiment of the present invention, a mechanical pressure is exerted on said cathode to press said cathode to said separator and consequently the separator against the anode. This embodiment is preferred in a classical zero-gap cell configuration where a cathodic elastic element ensures that the electrodes are firmly pressed against the separator in order to minimize cell voltage and consequently reduce energy consumption. A zero-gap cell configuration can also be achieved using an elastic element in the anodic compartment in order to press the anode against the separator and, in turn, the separator against the cathode. However, in the context of the present invention, using a cathodic elastic element is preferred. The cathodic elastic element allows efficient transfer of electrical current between the cathode and the cathodic current collector or bipolar plate without requiring the elastic elements to be welded to either the cathode or the current collector/bipolar plate. Especially when a negative differential pressure is applied, the presence of an elastic element in the cathodic compartment may help to avoid a detachment of the separator from the anodic electrode which would otherwise spoil the performance of the cell by increasing cell voltage.

In one embodiment of the method of the present invention, the ratio of hydrogen to oxygen (HTO) in said anodic compartment is kept below 4 vol.%. Preferably, the migration of hydrogen is limited to a level which keeps the HTO ratio in the anodic compartment below 2 vol.%, more preferably below 1.5 vol.%.

In one embodiment of the method of the present invention, the ratio of oxygen to hydrogen (OTH) in said cathodic compartment is kept below 4 vol.%. Preferably, the migration of oxygen is limited to a level which keeps the OTH ratio in the cathodic compartment also well below the 2 vol.%, more preferably well below 1.5 vol.%.

After separating said hydrogen gas from said catholyte and said oxygen gas from said anolyte, said catholyte is recycled to said cathodic compartment and said anolyte is recycled to said anodic compartment. Usually, in alkaline water electrolysis, the same electrolyte is used as an anolyte and catholyte and it is desired that the alkali concentration in the electrolyte remains the same in the anodic and cathodic compartment, respectively. However, as indicated above, due to different amounts of water being produced or consumed in anodic compartment and cathodic compartment, respectively, an imbalance of the alkali concentration in both compartments would result over prolonged operation.

When the same electrolyte is used as an anolyte and catholyte, it is possible to avoid such an imbalance by mixing the anolyte and catholyte after hydrogen/oxygen gas separation and recycling the mixture to the cathodic and anodic compartments, respectively. As the risk of an imbalance between catholyte and anolyte increases when the electrolyser is operated at a higher current density, recycling of a mixture of catholyte and anolyte is more effective at higher current densities than at lower current densities. Therefore, in one embodiment of the present invention, after separating said hydrogen gas from said catholyte and said oxygen gas from said anolyte, at operating current densities up to said threshold current density, said catholyte and anolyte are separately recycled, i.e. said catholyte is recycled to said cathodic compartment and said anolyte is recycled to said anodic compartment, and, at operating current densities above said threshold current density, said catholyte and anolyte are at least intermittently mixed and said mixture is recycled to the cathodic and anodic compartments, respectively. Accordingly, at operating current densities above, the threshold current density, anolyte and catholyte can continuously be mixed and the mixture is divided into a recycled feed for the cathodic compartment and a recycled feed for the anodic compartment. According to this embodiment, it is also possible that at operating current densities above the threshold current density, the mixing of recycled catholyte and anolyte is effected only intermittently when and as long as an imbalance between catholyte and anolyte is detected. This mode of operation ensures an optimized gas purity during low current density operation by keeping the anolyte and catholyte loops separated. The resulting build-up of an imbalance in alkali concentration is considered acceptable because the low current density operation is usually the exception from the high current density operation mode and is associated with less water production and consumption and consequently less imbalanced as compared to the high density operation mode. During high current density operation, a balanced and optimal alkali concentration is maintained in both the anodic and cathodic compartment. Gas contamination due to anolyte and catholyte mixing is considered acceptable because the high gas production rate at high current densities leads to a significant dilution of the respective undesired gas.

Preferably, the operating current densities in the method of the present invention are in a range up to 25 kA/m²: In principle, the minimum operating current density can be very low, just above 0 kA/m² and the maximum operating current density is at about 25 kA/m². Preferably, the operating current densities are in a range from 1 to 20 kA/m².

Within the range of operating current densities, threshold current density value delimiting the low current density operation mode from the high current density operation mode is selected within a range from 2 to 10 kA/m², preferably within a range from 3 to 6 kA/m². As an example, the threshold current density may be 4 kA/m².

Preferably, the alkaline water electrolysis according to the method of the present invention is conducted at an absolute hydraulic pressure in the range up to 100 bar, typically up to 50 bar.

According to one embodiment of the present invention, hydraulic pressure differential between said anodic and cathodic compartment is maintained in a range between -100 to 100 mbar, preferably in a range from -50 to 50 mbar, for instance at an value of +20 mbar or -20 mbar. The minimum hydraulic pressure differential as an absolute value, i.e. disregarding positive or negative sign, is 1 mbar, preferably10 mbar.

In one embodiment said separator is a diaphragm.

Preferably, said alkaline anolyte and said alkaline catholyte comprise aqueous solutions of alkali metal hydroxides. Particularly preferred, said alkali metal hydroxides are selected from sodium hydroxide or potassium hydroxide.

The present invention also concerns an electrolyzer for carrying out the method of the invention according to claim 14.

### BRIEF DESCRIPTION OF THE DRAWINGS

The invention will now be described in connection with certain preferred embodiments and corresponding figures in more detail.

In the drawings:
- Fig. 1: is a schematic explosion view of the components of an electrolysis cell of an electrolyzer suitable for carrying out the method of the present invention; and
- Fig. 2: is an overview of an electrolyzer suitable for carrying out the method of the present invention.

### DETAILED DESCRIPTION OF PREFERRED EMBODIMENTS

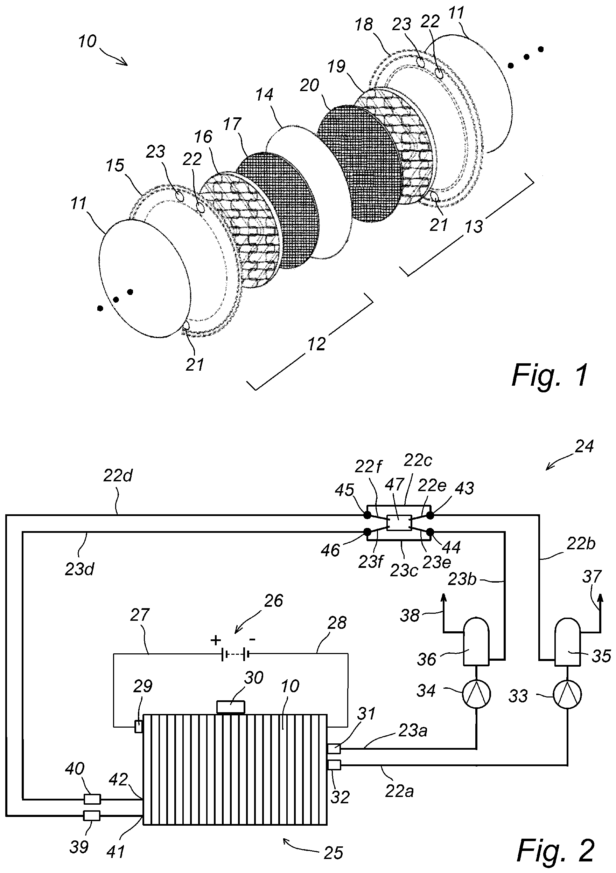

Fig. 1 depicts a schematic explosion view of major components of an electrolysis cell which forms part of a stack of electrolysis cells of an alkaline water electrolyser which can be used to carry out the method of the present invention. The electrolyser comprises a cell stack which includes a multiplicity of individual electrolysis cells 10 which are electrically connected in series. In Fig. 1, only the components of one electrolysis cell 10 have been depicted. In the stack, the sequence of components repeats as represented by the black dots. Each electrolysis cell 10 is delimited by bipolar plates 11 and comprises an anodic compartment 12 and a cathodic compartment 13 separated by a diaphragm 14. The anodic compartment 12 comprises a circumferential anodic frame 15, which houses an anodic current collector 16 and an anode (anodic electrode) 17.The anodic current collector 16 establishes a mechanical and electrical connection between the anodic side of bipolar plate 11 and anode 17. The anodic current collector 16 can be an elastic element but is preferably a rigid element, which can be welded to the anodic side of the bipolar plate11 and to the backside of the anode 17 The cathodic compartment 13 comprises a circumferential cathodic frame 18, which houses an cathodic current collector 19 and an cathode (cathodic electrode) 20. The cathodic current collector 19 is preferably an elastic element which presses the cathode 20 against the diaphragm 14.

The cell components further comprises channels for feeding alkaline electrolyte to the cathodic and anodic compartments (only one channel 21 is visible in Fig. 1) and fluid channels 22, 23 for discharging hydrogen/catholyte and oxygen/anolyte mixtures, respectively. Using two channels for electrolyte feed allows one channel 21 to feed the anodic compartments 12 and one channel (not visible in Fig. 1) to feed the cathodic compartments 13 of stack. After leaving the stack, the electrolyte can be recirculated separately for each of the fluid channels 22, 23 or may be mixed before re-entering the stack of cells 10 again. As will be described in more detail below, this allows establishing separate recirculation modes depending on the actual operating conditions.

The elements of the stack can further comprise openings for tie rods for clamping the various elements together to form the assembled stack (not shown in Fig. 1). Depending on the particular application, a stack can comprise a low number of electrolysis cells, for instance 5-20, up to a large number of cells, for instance more than 100 cells.

In order to visualize the operating scheme of an alkaline water electrolyser according to the present invention, Fig. 2 shows a schematic overview of an electrolyzer 24 suitable for carrying out the method of the present invention. The electrolyzer 24 comprises a stack 25 which can comprise a multiplicity of electrolysis cells 10, for instance electrolysis cells as depicted in Fig. 1. A source of electrical energy is denoted by reference sign 26. The source of electrical energy a can be any kind of electrical energy providing direct current (DC) at the required minimum voltage for carrying out water electrolysis. The DC source of electrical energy supplied to the electrolyzer 24 can be derived from a native AC or DC energy source. Usually, transformers and/or rectifiers are provided to obtain the desired DC source. Preferably, the source of electrical energy is a source which provides a variable electrical current, for instance a source of renewable electrical energy. A variable electrical current in the sense of the present invention is not an alternating current (AC) but a direct current (DC) having a strength which can vary over time but maintains the same polarization so that essentially the current density at the electrode level can vary during operation. The electrical current is fed to the stack 25 via electrical lines 27, 28. During operation, the current density j is continuously or periodically monitored with a suitable sensor 29 and a control unit 30 compares the measured current density with a pre-defined threshold current density *j_{T}.* In a low current density operating mode, i.e. at current densities *j* up to the threshold current density *j_{T},* the migration of hydrogen generated in the cathodic compartment through the separator into the anodic compartment is actively limited by establishing a negative pressure differential *Δp* between the cathodic and anodic compartments of the stack by establishing a higher oxygen pressure in the anodic compartment than the corresponding hydrogen pressure in the cathodic compartment (*Δp* = *p_{H2} - p_{O2}* < 0). This can for instance be accomplished by controlling, e.g. via control unit 30, suitable valves 31, 32 provided at the outlets of gas containing fluid channels 22, 23 (Fig. 1), i.e. where the fluid channels 22, 23 discharge into initial sections of recirculation lines 22a, 23a for catholyte and anolyte, respectively. Accordingly, the migration of hydrogen is limited ensuring an optimal oxygen purity. This operation mode may be associated with a small penalty in production capacity in instances where high H₂ purity is required because the oxygen migrating into the cathodic compartment results in an initially poorer hydrogen purity due to some migration of oxygen into the cathodic compartment which can subsequently be eliminated in a hydrogen purification step by catalytic combination of hydrogen and oxygen with an associated small loss in production capacity. In this low current density scheme, a double circulation mode for the electrolyte can be established by maintaining separate circuits for the catholyte, i.e. the electrolyte fed to the cathodic compartments and the anolyte, i.e. the electrolyte fed to the anodic compartments. The associated electrolyte unbalance between the cathodic and anodic compartments is acceptable in this low current density regime because at low current densities, any unbalance takes much longer to be established and because the steady state at equilibrium is "less unbalanced" than at high current density. The double circulation regime does, however, maintain an optimal gas purity because anolyte and catholyte are kept separately.

In the drawing of Fig. 2, the recirculation of anolyte and catholyte is schematically depicted by recirculation lines having line sections 22a, 22b, 22c, 22d and 23a, 23b, 23c, 23d, respectively, into which the respective channels electrolyte channels 18, 19 (Fig. 1) lead. A pump, preferably separate pumps 33, 34 for catholyte and anolyte, respectively, can be provided to effect the recirculation.

In the example of Fig. 2, the hydrogen/catholyte and the oxygen/anolyte mixtures discharged from the stack via line sections 22a, 23a, respectively, are fed into liquid/gas-separators 35, 36 from which hydrogen is discharged via line 37 and oxygen is discharged via line 38. The hydrogen-depleted catholyte is discharged via line section 22b of the catholyte recirculation line, while the oxygen-depleted anolyte is discharged via line section 23b of the anolyte recirculation line.

At current densities above the threshold current density *(j > j_{T}*)*,* a positive differential pressure between the cathodic and anodic compartments is established. Accordingly, a higher hydrogen pressure in the cathodic compartment is higher than the oxygen pressure in the anodic compartment so that a migration of oxygen from the anodic compartment into the cathodic compartment is actively limited (*Δp* = *p_{H2}* - *p_{O2}* > 0). This operation mode preserves optimal hydrogen purity, again possibly associated with a small penalty in production capacity represented by the hydrogen loss associated with hydrogen crossing over the diaphragm into the anodic compartment. The electrolyte concentrations in the cathodic and anodic compartments can be measured, for instance via conductivity sensors 39, 40 provided at the inlets 41, 42 of electrolyte channels for catholyte (shown at "21" in Fig. 1) and anolyte (not visible in Fig. 1), i.e. where the line sections 22d, 23d of the respective catholyte and anolyte recirculation lines are returned to the stack 25. Below a certain threshold of conductivity imbalance, a double circulation mode similar to the low current density case can be maintained to preserve optimal gas purity. Above a certain threshold, a mixed circulation mode can be established where catholyte and anolyte are mixed before being recirculated into the stack. In certain embodiments of the present invention, the mixed circulation mode can also be the only circulation mode under high current density conditions.

As depicted in Fig. 2, the mixed circulation mode can be established by suitable valves 43, 44, 45, 46 which ensure that anolyte and catholyte from stack 25 are fed into a mixing chamber 47 via lines 22e, 23e before being recirculated to the stack via lines 22f, 23f and the remaining portion 22d, 23d of the recirculation lines for catholyte and anolyte, respectively.

In the double circulation mode, the mixing chamber 47 is bridged via line sections 22c, 23c of the catholyte and anolyte recirculation lines.

In the high current density operation mode, the oxygen production in the anodic compartment is high enough to ensure that the HTO ratio is kept below the safety threshold. In the low current density operating mode, HTO ratio in the anodic compartment is kept low by the fact that the net hydrogen flux from cathode to anode is minimized by a differential pressures *Δp*, i.e. the pure diffusive flux of hydrogen from cathode to anode is mitigated by a convective flux (mainly oxygen but also hydrogen) from anode to cathode. The associated moderate increase of OTH ratio in the cathodic compartments is acceptable because OTH is less critical than HTO for safety purposes. In a preferred embodiment of the present invention, elastic elements (c.f. Fig. 1) can be provided in the cathodic compartment which ensure that even with moderate negative differential pressures *Δp*, a zero gap cell design can be maintained.

It is to be understood that the description of the foregoing exemplary embodiment(s) is (are) intended to be only illustrative, rather than exhaustive.

## Claims

1. A method for the electrolysis of water in an electrolyzer comprising at least one electrolytic cell having an anodic compartment provided with an anode, a cathodic compartment provided with a cathode, and a separator arranged between said anodic and cathodic compartments, wherein said method comprises:
feeding an alkaline anolyte to said anodic compartment and an alkaline catholyte to cathodic compartment,
conducting water electrolysis by applying a variable electrical current at a variable operating current density to said electrolytic cell to generate hydrogen gas at said cathode and oxygen gas at said anode,
discharging a mixture of said catholyte and said hydrogen gas from said cathodic compartment and a mixture of said anolyte and said oxygen gas from said anodic compartment,
separating said hydrogen gas from said catholyte and said oxygen gas from said anolyte,
wherein a threshold current density is selected and the water electrolysis is conducted such that
at operating current densities up to said threshold current density, limiting the migration of hydrogen generated in said cathodic compartment through said separator into said anodic compartment by exerting a hydraulic pressure on said separator in said anodic compartment which is higher than a hydraulic pressure exerted on said separator in said cathodic compartment, and
at operating current densities above said threshold current density, limiting a migration of oxygen generated in said anodic compartment through said separator into said cathodic compartment by exerting a hydraulic pressure on said separator in said cathodic compartment which is higher than a hydraulic pressure exerted on said separator in said anodic compartment.

2. The method of claim 1, wherein a mechanical pressure is exerted either on said cathode to press said cathode onto said separator or on said anode to press said anode onto said separator.

3. The method of one of claims 1 or 2, wherein the ratio of hydrogen to oxygen in said anodic compartment is kept below 4 vol.%.

4. The method of one of claims 1 or 2, wherein the ratio of oxygen to hydrogen in said cathodic compartment is kept below 4 vol.%.

5. The method of one of claims 1 to 4, wherein after separating said hydrogen gas from said catholyte and said oxygen gas from said anolyte, said catholyte is recycled to said cathodic compartment and said anolyte is recycled to said anodic compartment.

6. The method of one of claims 1 to 4, wherein after separating said hydrogen gas from said catholyte and said oxygen gas from said anolyte,
at operating current densities up to said threshold current density, said catholyte is recycled to said cathodic compartment and said anolyte is recycled to said anodic compartment,
and, at operating current densities above said threshold current density, said catholyte and anolyte are at least intermittently mixed and said mixture is recycled to the cathodic and anodic compartments.

7. The method of one of claims 1 to 6, wherein said operating current densities are in a range up to 25 kA/m².

8. The method of claim 7, wherein said threshold current density is selected within a range from 2 to 10 kA/m².

9. The method of one of claims 1 to 8, wherein said water electrolysis is conducted at an absolute hydraulic pressure in the range up to 100 bar.

10. The method of claim 9, wherein a hydraulic pressure differential between said anodic and cathodic compartment is maintained in a range between -100 to 100 mbar.

11. The method of one of claims 1 to 10, wherein said separator is a diaphragm.

12. The method of one of claims 1 to 11, wherein said alkaline anolyte and said alkaline catholyte comprise aqueous solutions of alkali metal hydroxides.

13. The method of claim 12, wherein said alkali metal hydroxides are selected from sodium hydroxide or potassium hydroxide.

14. Electrolyzer the electrolysis of water comprising at least one electrolytic cell having an anodic compartment provided with an anode, a cathodic compartment provided with a cathode, and a separator arranged between said anodic and cathodic compartments, wherein said electrolyzer is configured to carry out the method of 1 of claims 1 to 13.

## Patentansprüche

1. Verfahren zur Elektrolyse von Wasser in einem Elektrolyseur, der mindestens eine Elektrolysezelle mit einer Anodenkammer, die mit einer Anode versehen ist, einer Kathodenkammer, die mit einer Kathode versehen ist, und einem Separator, der zwischen der Anoden- und der Kathodenkammer angeordnet ist, aufweist, wobei das Verfahren aufweist:
Zuführen eines alkalischen Anolyten zu der Anodenkammer und eines alkalischen Katholyten zu der Kathodenkammer,
Durchführen einer Wasserelektrolyse durch Anlegen eines variablen elektrischen Stroms bei einer variablen Betriebsstromdichte an die Elektrolysezelle, um Wasserstoffgas an der Kathode und Sauerstoffgas an der Anode zu erzeugen,
Abführen einer Mischung aus dem Katholyten und dem Wasserstoffgas aus der Kathodenkammer und einer Mischung aus dem Anolyten und dem Sauerstoffgas aus der Anodenkammer,
Trennen des Wasserstoffgases von dem Katholyten und des Sauerstoffgases von dem Anolyten,
wobei eine Schwellenstromdichte ausgewählt wird und die Wasserelektrolyse so durchgeführt wird, dass
bei Betriebsstromdichten bis zu der Schwellenstromdichte die Migration von in der Kathodenkammer erzeugtem Wasserstoff durch den Separator in die Anodenkammer begrenzt wird durch Ausüben eines hydraulischen Drucks auf den Separator in der Anodenkammer, der höher ist als ein in der Kathodenkammer auf den Separator ausgeübter hydraulischer Druck, und
bei Betriebsstromdichten oberhalb der Schwellenstromdichte eine Migration von in der Anodenkammer erzeugtem Sauerstoff durch den Separator in die Kathodenkammer begrenzt wird durch Ausüben eines hydraulischen Drucks auf den Separator in der Kathodenkammer, der höher ist als ein in der Anodenkammer auf den Separator ausgeübter hydraulischer Druck.

2. Verfahren nach Anspruch 1, wobei ein mechanischer Druck entweder auf die Kathode ausgeübt wird, um die Kathode auf den Separator zu drücken, oder auf die Anode, um die Anode auf den Separator zu drücken.

3. Verfahren nach einem der Ansprüche 1 oder 2, wobei das Verhältnis von Wasserstoff zu Sauerstoff in der Anodenkammer unter 4 Vol. % gehalten wird.

4. Verfahren nach einem der Ansprüche 1 oder 2, wobei das Verhältnis von Sauerstoff zu Wasserstoff in der Kathodenkammer unter 4 Vol. % gehalten wird.

5. Verfahren nach einem der Ansprüche 1 bis 4, wobei nach dem Trennen des Wasserstoffgases von dem Katholyten und des Sauerstoffgases von dem Anolyten der Katholyt zu der Kathodenkammer rezykliert wird und der Anolyt zu der Anodenkammer rezykliert wird.

6. Verfahren nach einem der Ansprüche 1 bis 4, wobei nach dem Trennen des Wasserstoffgases von dem Katholyten und des Sauerstoffgases von dem Anolyten
bei Betriebsstromdichten bis zu der Schwellenstromdichte der Katholyt zu der Kathodenkammer rezykliert wird und der Anolyt zu der Anodenkammer rezykliert wird,
und bei Betriebsstromdichten oberhalb der Schwellenstromdichte der Katholyt und der Anolyt zumindest intermittierend gemischt werden und die Mischung zu der Kathoden- und der Anodenkammer rezykliert wird.

7. Verfahren nach einem der Ansprüche 1 bis 6, wobei die Betriebsstromdichten in einem Bereich bis zu 25 kA/m² liegen.

8. Verfahren nach Anspruch 7, wobei die Schwellenstromdichte innerhalb eines Bereichs von 2 bis 10 kA/m² gewählt wird.

9. Verfahren nach einem der Ansprüche 1 bis 8, wobei die Wasserelektrolyse bei einem absoluten hydraulischen Druck im Bereich bis zu 100 bar durchgeführt wird.

10. Verfahren nach Anspruch 9, wobei eine hydraulische Druckdifferenz zwischen der Anoden- und der Kathodenkammer in einem Bereich zwischen -100 bis 100 mbar gehalten wird.

11. Verfahren nach einem der Ansprüche 1 bis 10, wobei der Separator ein Diaphragma ist.

12. Verfahren nach einem der Ansprüche 1 bis 11, wobei der alkalische Anolyt und der alkalische Katholyt wässrige Lösungen von Alkalimetallhydroxiden aufweisen.

13. Verfahren nach Anspruch 12, wobei die Alkalimetallhydroxide aus Natriumhydroxid oder Kaliumhydroxid ausgewählt sind.

14. Elektrolyseur für die Elektrolyse von Wasser, aufweisend mindestens eine Elektrolysezelle mit einer Anodenkammer, die mit einer Anode versehen ist, einer Kathodenkammer, die mit einer Kathode versehen ist, und einem Separator, der zwischen der Anoden- und der Kathodenkammer angeordnet ist, wobei der Elektrolyseur eingerichtet ist, das Verfahren nach einem der Ansprüche 1 bis 13 auszuführen.

## Revendications

1. Procédé pour l'électrolyse d'eau dans un électrolyseur comprenant au moins une cellule électrolytique ayant un compartiment anodique pourvu d'une anode, un compartiment cathodique pourvu d'une cathode, et un séparateur disposé entre lesdits compartiments anodique et cathodique, dans lequel ledit procédé comprend :
l'alimentation dudit compartiment anodique en anolyte alcalin et dudit compartiment cathodique en catholyte alcalin,
l'exécution d'une électrolyse d'eau en appliquant un courant électrique variable à une densité de courant de fonctionnement variable à ladite cellule électrolytique pour générer du gaz d'hydrogène à ladite cathode et du gaz d'oxygène à ladite anode,
la décharge d'un mélange dudit catholyte et dudit gaz d'hydrogène dudit compartiment cathodique et d'un mélange dudit anolyte et dudit gaz d'oxygène dudit compartiment anodique,
la séparation dudit gaz d'hydrogène dudit catholyte et dudit gaz d'oxygène dudit anolyte,
dans lequel une densité de courant seuil est sélectionnée et l'électrolyse d'eau est conduite de telle sorte que :
à des densités de courant de fonctionnement jusqu'à ladite densité de courant seuil, limiter la migration d'hydrogène généré dans ledit compartiment cathodique à travers ledit séparateur dans ledit compartiment anodique en exerçant une pression hydraulique sur ledit séparateur dans ledit compartiment anodique qui est plus élevée qu'une pression hydraulique exercée sur ledit séparateur dans ledit compartiment cathodique, et
à des densités de courant de fonctionnement supérieures à ladite densité de courant seuil, limiter une migration d'oxygène généré dans ledit compartiment anodique à travers ledit séparateur dans ledit compartiment cathodique en exerçant une pression hydraulique sur ledit séparateur dans ledit compartiment cathodique qui est supérieure à une pression hydraulique exercée sur ledit séparateur dans ledit compartiment anodique.

2. Procédé selon la revendication 1, dans lequel une pression mécanique est exercée soit sur ladite cathode pour presser ladite cathode sur ledit séparateur, soit sur ladite anode pour presser ladite anode sur ledit séparateur.

3. Procédé selon l'une des revendications 1 ou 2, dans lequel le rapport hydrogène/oxygène dans ledit compartiment anodique est maintenu au-dessous de 4 % en volume.

4. Procédé selon l'une des revendications 1 ou 2, dans lequel le rapport oxygène/hydrogène dans ledit compartiment cathodique est maintenu au-dessous de 4 % en volume.

5. Procédé selon l'une des revendications 1 à 4, dans lequel, après avoir séparé ledit gaz d'hydrogène dudit catholyte et ledit gaz d'oxygène dudit anolyte, ledit catholyte est recyclé vers ledit compartiment cathodique et ledit anolyte est recyclé vers ledit compartiment anodique.

6. Procédé selon l'une des revendications 1 à 4, dans lequel, après avoir séparé ledit gaz d'hydrogène dudit catholyte et ledit gaz d'oxygène dudit anolyte,
à des densités de courant de fonctionnement allant jusqu'à ladite densité de courant seuil, ledit catholyte est recyclé vers ledit compartiment cathodique et ledit anolyte est recyclé vers ledit compartiment anodique,
et, à des densités de courant de fonctionnement supérieures à ladite densité de courant seuil, ledit catholyte et ledit anolyte sont mélangés au moins par intermittence et ledit mélange est recyclé vers les compartiments cathodique et anodique.

7. Procédé selon l'une des revendications 1 à 6, dans lequel lesdites densités de courant de fonctionnement sont dans une plage allant jusqu'à 25 kA/m².

8. Procédé selon la revendication 7, dans lequel ladite densité de courant seuil est sélectionnée dans une gamme allant de 2 à 10 kA/m².

9. Procédé selon l'une des revendications 1 à 8, dans lequel ladite électrolyse d'eau est réalisée à une pression hydraulique absolue dans une plage allant jusqu'à 100 bar.

10. Procédé selon la revendication 9, dans lequel un différentiel de pression hydraulique entre lesdits compartiments anodique et cathodique est maintenu dans une plage entre -100 à 100 mbar.

11. Procédé selon l'une des revendications 1 à 10, dans lequel ledit séparateur est un diaphragme.

12. Procédé selon l'une des revendications 1 à 11, dans lequel ledit anolyte alcalin et ledit catholyte alcalin comprennent des solutions aqueuses d'hydroxydes de métaux alcalins.

13. Procédé selon la revendication 12, dans lequel lesdits hydroxydes de métaux alcalins sont choisis parmi l'hydroxyde de sodium ou l'hydroxyde de potassium.

14. Électrolyseur pour l'électrolyse d'eau comprenant au moins une cellule électrolytique ayant un compartiment anodique pourvu d'une anode, un compartiment cathodique pourvu d'une cathode, et un séparateur disposé entre lesdits compartiments anodique et cathodique, dans lequel ledit électrolyseur est configuré pour mettre en œuvre le procédé selon l'une des revendications 1 à 13.
